# EUROPEAN PATENT SPECIFICATION

(11) **EP 2 869 708 B1**
(45) Date of publication and mention of the grant of the patent: **26.10.2016**
(21) Application number: 13747532.3
(22) Date of filing: 03.07.2013
(51) Int. Cl.: A23C 15/16, A23D 7/015

(54) **PRODUCTION TECHNOLOGY OF FAT MIXES WITH REDUCED FAT CONTENT**
HERSTELLUNGSTECHNOLOGIE FÜR FETTMISCHUNGEN MIT REDUZIERTEM FETTGEHALT
TECHNOLOGIE DE PRODUCTION DE MÉLANGES GRAS À TENEUR RÉDUITE EN GRAS

(30) Priority: 05.07.2012 PL 39981312
(43) Date of publication of application: 13.05.2015
(73) Proprietor: Uniwersytet Warminsko - Mazurski w Olsztynie, PL-10-957 Olsztyn - Kortowo (PL); PMT TRADING SP.Z.O.O., PL-90-616 Lódz (PL)
(72) Inventor: STANIEWSKI, Boguslaw, PL-10-696 Olsztyn (PL); BARANOWSKA, Maria, PL-10-089 Olsztyn (PL); CHOJNOWSKI, Wladyslaw, PL-10-373 Wadag (PL); BOHDZEWICZ, Krzysztof, PL-10-806 Olsztyn (PL)
(74) Representative: Dziubinska, Joanna
(86) International application number: PCT/PL2013/000086
(87) International publication number: WO 2014/007665

(56) References cited:
- WO-A1-2005/013710
- DE-A1- 10 104 945
- US-A1- 2004 151 803

## Description

The object of the invention is production technology of fat mixes, either for direct consumption or as a food product for consumption after refrigerated storage. Following the valid regulations (EC Regulation No. 1234/2007 of October 22, 2007 with later amendments), these products take the form of solid, soft emulsion, mainly of water-in-oil emulsion *(wio),* obtained from solid and/or liquid vegetable and/or animal fats, appropriate for human consumption and with the milk fat content between 10% and 80% of the total fat content. In general, fat mixes can be divided into four (4) groups. Depending on the total fat content, they are called: fat mix, fat mix with a ¾ fat content, semi-skimmed fat mix or fat mix spread with X% (where X means the percent of fat content in a product). The majority of the current mix production methods have been based on recognised technologies: the classical technologies of butter or margarine production or those, by which butter-like products are produced in result of mechanical processing (homogenisation), combined with stabilisation of reological features of a ready-made product with various types of stabilisers.

The known types of mixes - butter-like products, include in their contents: fat, water, protein and lactose, as well as mineral compounds, stabilisers, flavour substances and vitamins. Milk fermentation bacteria, as well as probiotic bacteria, may be used in their production.

The production of fat mixes - butter-like products - most often starts with cream separation by milk centrifugation, followed by cream pasteurisation in temperature of 93-98°C for 30-40 seconds and degassing, if necessary, at temperature levels close to pasteurisation temperature and under pressure, reduced to 60 ± 10 kPa, completed with cream refrigeration to 8-10°C. Further stages of the process include mixing of the processed cream with milk powder and/or other additives, including stabilisers, after previous regeneration in a slight volume of water, skimmed milk or processed cream in temperature of approximately 45°C. Such a homogenised mixture is then submitted to pasteurisation process (most often in a temperature range of 75-90°C), followed by refrigeration to temperature of 27-29°C. This refrigerated mixture is now provided with a starter or a concentrate of mesophilic milk bacteria in volume, ensuring the assumed degree of souring. Thus homogenised mixture is now submitted to further, two-stage homogenisation process under pressure of 12-15 MPa in the first stage and 3.5 MPa in the second one. Then, the mixture is cured in temperature of approximately 32°C till the assumed pH is obtained with consistence of very dense cream. Potato flour is added to a part of the soured mixture and, after homogenisation, this part is introduced into the remaining part of the mixture, while constantly stirring. Salt may also be added at this stage. The mixture, homogenised again, is now submitted to thermisation in 70°C for 10-20 minutes. After starch mashing, the mixture is submitted to smoothing homogenisation under pressure of approximately 1 MPa. The homogenised, hot mixture (of approximately 65°C) is now fed through a buffer tank into a packing device. The packed mix is handled to a cool store (2-3°C) to refrigerate the product to approximately 10°C.

It is also possible to obtain fat mixes with lower fat content by mixing cream with a very high fat content (50-70%), pasteurised, refrigerated to 18-20°C and submitted to physical maturation, with refrigerated vegetable oil, followed by a reversal of phases in a scrapped surface heat exchanger, allowing simultaneous mechanical processing and refrigeration of the processed cream. The final features of the product are formed in finger-kneaders, often coupled with a scrapped surface heat exchanger.

Another manufacturing procedure to get a fat product with a lower fat content has been known from the patent application No. PL 307853 . This method involves mixing of cream with 40-80% fat content with a required volume of water phase, containing stabilising agents and salt. In the course of the mixing process, temperature is kept between 50°C and 80°C. The produced mixture, an oil-in-water emulsion, is refrigerated and processed in such a way as to obtain a reversal of phases. A certain part of the product with reversed phases, now in the form of water-in-oil emulsion, is channelled back to the input of the first cooling phase to be mixed with the baseline mixture. The obtained finished product contains durable water-in-oil emulsion. This product contains exclusively milk fat at 25-60% content, natural emulsifiers, which occur in cream, and the casein content below 2%.

Considerable fat mix production potentials are also provided by recombination technology, allowing to reproduce o/w and w/o emulsifying systems from anhydrous milk fat or its mixtures with other fats, water and various types of protein components which are the source of non fat total solid. It is also possible to add flavour substances, cultures of milk fermentation bacteria and, if necessary (in products with a decreased fat content), also agents, which support the course of the technological process and stabilise the structure of finished products (stabilisers). Very important elements in the recombination technology are facilities and installations, which - similarly as in the above-mentioned solution - allow for a simultaneous cooling and intensive mechanical processing of the baseline mixture, what enables phase transformation from oil-in-water type emulsion into a butter-like emulsion of the water-in-oil type.

The above presented production technologies of butter-like products (mixes) with a decreased fat content assume, beside protein level supplementation (in various forms), also an additional use of various stabilisers to support the water phase on one hand, while providing proper structure and consistence on the other.

Following this invention, the production method of fat mix with a decreased fat content, consisting in cream separation from milk, fat content normalisation, pasteurisation, preparation of a cream mixture with powdered milk and/or other protein carriers, pasteurisation of the mixture, refrigeration, homogenisation, introduction of the other thickening and flavouring supplements, thermisation, homogenisation, and hot packing, is characterised by the fact that pasteurised, normalised cream, either supplemented or not with an addition of recombined cream, is completed with milk protein carriers, and the entire product is then submitted to thermal processing at 85-135°C for 10-180 seconds, degassed, refrigerated to 30-55°C and supplemented with transglutaminase in solution or solid form and in quantity of 0.1-20.0 U/g of protein, then the entire product is kept in the same temperature for 15-70 minutes, followed by thermal processing at 72-92°C for 30-180 seconds, cooled down to approximately 72°C, homogenised and treated - or not - in a standard way by an addition of flavour components, submitted to thermisation, formation, packing and refrigeration.

In the procedure, defined by the invention, the stage of transglutaminase addition may optionally be changed, from addition to the mixture consisting of cream with some recombined cream and a solution of milk protein carriers, submitted to thermal processing, to an addition to cream, submitted to thermal processing and, separately, to the thermally processed solution of milk protein carriers or only to the thermally processed solution of milk protein carriers.

The procedure, specified in the invention, allows the production of a fat mix with a decreased fat content - a fat mix with a ¾ fat content, a semi-skimmed fat mix or a spreading fat mix with X%, in which the addition of stabilisers is either reduced or eliminated. The transglutaminase-induced modifications, which occur in proteins, enable modelling of organoleptic and reological features of the product via the formation of bonds, cross-linking of the milk proteins and/or their products of their degradation to stable polymers, resistant to mechanical impacts, insensitive to heating and thus stable components of the homogenous structure of the protein matrix, allowing for a uniform layout and retention of the water phase, contained in the product.

An advantage of the method, as specified in the invention, is a possibility to eliminate addition of the non-lactic origin (e.g., pork gelatine, native starch or modified starch), what reduces the caloricity of a finished product, obtained in more cost-effective production.

The fat mix with a decreased fat content, obtained by the method, specified in the invention, is characterised by a smooth, uniform texture, better spreadability and organoleptic features, higher evaluated than in the fat mix, produced by the traditional method, while its quality is stable during the entire shelf-life period.

Transglutaminase catalyses acyl group transfer reactions in animal and plant protein, in which the γ-carboxyamide group of glutamine residues is a donor, while primary amine groups in various compounds may play the role of acceptors. In result of this reaction ε-(γ-glutamyl)-lysine, a dipeptide, is formed. Transglutaminase catalyses the binding reactions of various proteins, peptides, amines and amino acids, containing lysine and glutamine. In result of reaction with the amine group of protein-bound lysine, cross-covalent bonds are formed, cross-linking of the polypeptide chains of protein within one molecule or between molecules. If the acceptor of the acyl group is a free amino acid, a reaction of amine group binding and incorporating is triggered and the protein is enriched with this amino acid. The ε-amine groups of lysine are in this way protected against adverse changes, while the degree of utilisation of proteins and of the products of their degradation rises, thus increasing the nutrition value of the product. Retaining of valuable whey proteins in curd may be a good example. In the classical method, the proteins are transferred into the whey.

The modifications, which take place within proteins in result of transglutaminase effects, reduce immunoreactivity of the proteins. Moreover, they bring about changes in the functional properties of protein, including, among others, an increased water binding ability, foam formation, viscosity, improved emulsifying and gelling properties. In consequence, modified proteins improve the taste, flavour, appearance and consistence of food products, while extending their durability and shelf-life.

In the production of dairy products, where stabilisers are used and their basic functions include strengthening of milk protein networks or water binding (e.g. yoghurts), the use of transglutaminase allows to reduce their levels or totally eliminate their addition. In result of protein modification with participation of the enzyme, an almost homogenous structure emerges of mutually bound protein aggregates, what facilitates retention of higher water volumes. A higher thermal stability of proteins ensures the lack of any visible changes in the properties of dairy products in the course of their heating.

In production technology of fat mixes with reduced fat content the milk protein carriers can be: skimmed milk powder, whey powder, milk, condensed by evaporation or by means of membrane systems (UF, RO, microfiltration), a concentrate/isolate of milk proteins, a concentrate/isolate of whey proteins or their mixture. The recombined cream is added in the form of a prepared mixture, consisting of skimmed milk and vegetable oils and/or animal fats and/or modified fats.

The object of invention will be presented in embodiment examples.

### Example 1

Raw milk is heated to 45°C and centrifuged to obtain cream with the fat content of 55%. This cream is then supplemented with milk protein concentrate 75, solved in a small amount of water, in a 1.8% proportion to cream volume. The obtained mixture is submitted to pasteurisation at 98°C for 40 seconds and degassing in temperature, close to that in pasteurisation, and under pressure reduced to 60 ± 10 kPa. Then, the mixture of cream and milk protein mixture, refrigerated down to 45°C, is supplemented with transglutaminase enzyme (5.0 U/g of protein with enzyme activity of 100 U/g powder) solved in a small volume of milk, and the entire mixture is then kept in this temperature for subsequent 40 minutes. The volume of the added enzyme and the time of its activity has to secure optimal conditions for the formation of cross covalent bonds and crosslinking of the polypeptide chains of the protein, present in the cream/mixture, allowing to obtain required reological features in the finished product. Then, the mixture of cream and milk protein concentrate is submitted to thermal processing in 90°C for 60 seconds and, after cooling down to 72°C, it is homogenised in two stages (I under 140 bar and II under 30 bar) and thermised in 72°C for 5 minutes, formed and packed in cups, followed by refrigeration of the product to approximately 10°C.

### Example 2.

Raw milk is heated to 45°C and centrifuged to obtain cream with 40% fat content. The obtained cream is submitted to thermal processing in 125°C for 10 seconds, cooled down to 55°C, supplemented with transglutaminase in 1.0 U/g volume and kept for 15 minutes. Simultaneously, a solution of protein carriers is set up, including skimmed milk powder in 1.8% proportion to cream volume and salt in 0.7% proportion, both being solved in a small volume of water. The obtained mixture is submitted to pasteurisation in 85°C for 90 seconds. After cooling down to 50°C, transglutaminase is added in a quantity of 10 U/g of protein and the whole mixture is kept for 30 minutes. The volume of the added enzyme has to secure optimal conditions for the formation of cross covalent bonds and crosslinking of the polypeptide chains of the protein, present in the cream/mixture, allowing to obtain required reological features in the finished product. Such prepared components are mixed together, supplemented with herbs and heated up to 72°C, followed by a two-stage homogenisation (I under 140 bar and II under 30 bar), thermised in 72°C for 5 minutes, formed, packed in cups and refrigerated to approximately 10°C.

### Example 3

Raw milk is heated to 45°C and centrifuged to obtained cream with 50% fat content. The obtained cream is submitted to thermal processing in 85°C for 180 seconds and, after degassing, cooled down to 30°C, supplemented with mesophilic bacteria cultures *(Lactococcus* and *Leuconostoc)* from milk fermentation, the bacteria enriched with an additional microflora of the *Lactobacillus* and *Bifidobacterium* type. Simultaneously, a milk protein carrier is set up by solving milk protein concentrate 75 in small volume of water (in 2.0% proportion to cream volume) and pasteurised in 95°C for 120 seconds. After cooling down to 40°C, transglutaminase is added in volume of 8 U/g of the protein and kept for 70 minutes. Then, the cream, soured to minimum pH of 4.6, and the prepared milk protein carrier are mixed together and heated up to 72°C, submitted to homogenisation, thermisation in 72°C for 2 minutes, packed at this temperature in unit packages and then refrigerated to storage temperature.

## Claims

1. Method for the production of a fat mix with a decreased fat content, consisting in cream separation from milk, fat content normalisation, pasteurisation, preparation of a cream mixture with milk powder and/or other protein carriers, mixture pasteurisation, cooling, homogenisation, an addition of starters, souring, an addition of other thickening and flavouring components, thermisation, smoothing homogenisation and hot packing, **characterized in that** pasteurised, normalised cream, supplemented or not with an addition of recombined cream, is completed with milk protein carriers and the entire mixture is then submitted to thermal processing at a temperature of 85-135°C for 10-180 seconds, degassed, cooled down to 30-55°C, supplemented with transglutaminase, either as solution or in solid form, in a quantity of 0.1-20.0 U/g of the protein, then the whole product is kept at this temperature for 15-70 minutes, then submitted to thermal processing at 70-92°C for 30-180 seconds, cooled down to approximately 72°C, homogenised and treated in a standard way by an addition - or not - of flavour components, and submission to thermisation, formation, packing and refrigeration.

2. The method, as specified in Claim No. 1, **characterized in that** the transglutaminase is added separately to the thermally processed cream and to the solution of milk protein carriers, submitted to thermal processing.

3. The method, as specified in Claim No. 1, **characterized in that** the transglutaminase is added to the thermally processed solution of milk protein carriers.

## Patentansprüche

1. Die Methode der Herstellung von Mischfetten mit reduziertem Fettgehalt, die auf Trennung der Sahne aus Milch, Normalisierung des Fettgehaltes, Pasteurisierung, Vorbereitung des Gemisches der Sahne mit Milchpulver und/oder anderen Proteinträgern, Pasteurisierung des Gemisches, Abkühlung, Homogenisierung, Zugabe von Sauerteig, Einsäuern, Einführung von übrigen Verdickungs- und Geschmacksmitteln, Thermisation, glättender Homogenisierung, Wärmeverpackung beruht, kennzeichnet sich dadurch, dass in die pasteurisierte, normalisierte Sahne, die mit oder ohne rekombinante Sahne ergänzt wird, Proteinträger hinzugefügt werden und das Ganze dann bei der Temperatur von 85 -135°C 10-180 Sekunden lang thermisch bearbeitet, entgast, auf die Temperatur von 30 - 55°C abgekühlt wird, das Enzym - Transglutaminase als Lösung oder in fester Form in der Menge von 0,1-20,0U/g Protein eingeführt wird, danach wird das Ganze bei dieser Temperatur 15-70 Minuten lang gehalten und dann bei 70 - 92°C 30-180 Sekunden lang thermisch bearbeitet, auf die Temperatur von etwa 72°C abgekühlt und homogenisiert und danach erfolgt eine bekannte Behandlung, die auf Zugabe von Geschmacks- und Duftstoffbestandteilen oder ohne diese Bestandteile, Thermisation, Formen, Verpacken und Abkühlen beruht.

2. Die Methode gemäß Bestimmung 1 kennzeichnet sich dadurch, dass das Enzym-Transglutaminase getrennt in die der thermischen Bearbeitung unterzogenen Sahne und in die Lösung der der thermischen Bearbeitung unterzogenen Milchproteinträger hinzugefügt wird.

3. Die Methode gemäß Bestimmung 1 kennzeichnet sich dadurch, dass das Enzym-Transglutaminase in die der thermischen Bearbeitung unterzogenen Lösung der Milchproteinträger hinzugefügt wird.

## Revendications

1. La méthode de la production des mixes de graisse du contenu base de la graisse consistant à la séparation de la crème fraîche du lait, de la normalisation du contenu de la graisse, de la pasteurisation, préparation du mélange de la crème fraîche avec du lait en poudre et/ou d'autres supports des protéines de la pasteurisation du mélange, de refroidissement, d'homogénéisation, l'addition des acides, acidification, l'introduction d'autres suppléments condensés et de la saveur, de la thermisation, d'homogénéisation lissée, l'emballage à chaud qui consiste à l'ajout à la crème fraîche normalisée avec ou sans le complément de la crème fraîche recombinée avec les supports des protéines du lait, la totalité est soumise au processus thermique à la température de 85 -135°C pendant 10 -180 seconds et dégazage, on refroidit à la température de 30 - 55°C et on ajout l'enzyme de transglutaminase dans la forme de liquide ou stable dans la quantité 0,1-20,0U/g de protéine et ensuite la totalité est conservée dans cette température pendant 15-70 minutes, ensuite on applique le traitement thermique à la température 70 - 92°C pendant 30 -180 seconds, on refroidit jusqu'à la température d'environ 72°C, on applique l'homogénéisation, et ensuite par la méthode bien connue par addition des composants du goût et de l'arôme ou non, on applique la termisation, le formage, l'emballage et le refroidissement

2. La méthode selon la clause 1 se **caractérise par** cela que l'enzyme de transglutaminase est ajouté à part à la crème fraîche traitée et à la solution des supports de protéine du lait traité thérmiquement.

3. La méthode selon la clause 1 se **caractérise par** cela, que l'enzyme de transglutaminase est ajouté à la solution des supports de protéine du lait traité thérmiquement.
